# EUROPÄISCHE PATENTANMELDUNG

(11) **EP 2 230 626 A1**
(43) Veröffentlichungstag der Anmeldung: **22.09.2010**
(21) Anmeldenummer: 10002551.9
(22) Anmeldetag: 11.03.2010
(51) Int. Cl.: G06K 7/08, B27M 1/08, B27D 5/00, G06K 19/077

(54) **Kennzeichnungsverfahren und Verarbeitungsverfahren von Massiv- und Verbundvollmaterialplatten mittels RFID sowie Vorrichtung hierzu**

(30) Priorität: 15.03.2009 DE 102009012864; 14.05.2009 DE 102009021408
(71) Anmelder: Dula-Werke Dustmann & Co. GmbH, 44225 Dortmund (DE)
(72) Erfinder: Dustmann, Heinz-Herbert, 44227 Dortmund (DE); Müller, Knut, 44225 Dortmund (DE)
(74) Vertreter: Patentanwälte Buse, Mentzel, Ludewig

(57) **Zusammenfassung**

Die Erfindung betrifft ein Verfahren zur Verarbeitung von Massivplattenwerkstücken (1), insbesondere von Massivholzplatten mit einem RFID-Tag (2), insbesondere einem in einer Ausnehmung (10) des Massivplattenwerkstücks (1) angeordneten RFID-Tag (2). Das erfindungsgemäße Verfahren umfasst die Schritte: Einlesen von auf dem RFID-Tag (2) abgelegten Verarbeitungsinformationen, Verarbeiten des Massivplattenwerkstücks (1) unter Berücksichtigung der eingelesenen Verarbeitungsinformationen und Ablegen von Informationen, umfassend Informationen über den Verarbeitungsvorgang auf dem RFID-Tag (2). Des Weiteren umfasst die Erfindung eine Vorrichtung (100) zur Verarbeitung von Massivplattenwerkstücken (1), insbesondere von Massivholzplatten, welche Folgendes umfasst: Eine Bereitstellungseinheit (20, 21) zum Bereitstellen eines Massivplattenwerkstücks (1) und mehrere Verarbeitungseinheiten zur mehrstufigen Verarbeitung eines Massivplattenwerkstücks (1). Die Erfindung schlägt vor, dass weiterhin Mittel zur Durchführung eines erfindungsgemäßen Verfahren vorgesehen sind, wobei insbesondere mindestens eine Einbringeinheit (7) vorgesehen ist, um den RFID-Tag (2) in die Ausnehmung (10) ohne Überstand einzubringen (Fig. 2).

## Beschreibung

Die Erfindung betrifft ein Verfahren zur Kennzeichnung von Massivplattenwerkstücken, insbesondere von Massivholz- und Verbundvollmaterialplatten gemäß dem Oberbegriff des Anspruchs 1.

Auch betrifft die Erfindung eine Kantenanleimstation zum Anleimen von Kanten an ein Werkstück, insbesondere an ein plattenförmiges Werkstück, zur Fertigung von Möbelstücken.

Außerdem betrifft die Erfindung eine Vorrichtung zur Verarbeitung von Massivplattenwerkstücken, insbesondere von Massivholzplatten, mit einer Kennzeichnung, gemäß dem Oberbegriff des Anspruchs 9.

Zudem betrifft die Erfindung eine Verwendung eines RFID-Tags zur Kennzeichnung von Massivplatten in einem mehrstufigen Verarbeitungsprozess, gemäß dem Oberbegriff des Anspruchs 14.

Bei Produktionsprozessen mit mehreren Verarbeitungsstufen werden Werkstücke innerhalb einer Individualfertigung in mehreren Schritten verarbeitet und zwischen verschiedenen Fertigungsschritten häufig zwischengelagert, insbesondere um Rüstzeiten an weiterverarbeitenden Stationen zu reduzieren. Hierzu werden aus unterschiedlichen Kommissionen, Aufträgen, Projekten etc. Werkstücke ähnlicher Struktur, Dimension, Material oder anderen Eigenschaften zwischengelagert oder gepoolt, um sie dann auftragsneutral weiter zu verarbeiten. Um die Werkstücke anschließend den einzelnen Aufträgen wieder zuzuführen, ist es bekannt, die Werkstücke für eine Identifikation zu kennzeichnen, zum Beispiel durch entsprechende Kennzeichnungsmittel.

Aus dem Stand der Technik ist allgemein die Verwendung von Kennzeichnungsmitteln wie Etiketten, Barcodes, Aufdrucke, Inkjet-Codes und dergleichen für verschiedene Anwendungen bekannt.

Die Kennzeichnungsmittel und Kennzeichnungsverfahren gemäß dem Stand der Technik weisen jedoch den Nachteil auf, dass die einzelnen Werkstücke nur aufwendig wiederzuerkennen sind, oftmals manuell gehandhabt werden müssen und folglich auch fehlerhaft nachfolgenden Arbeitsschritten zugeführt werden. Insbesondere bei Plattenmaterialien ist eine Kennzeichnung mit entsprechenden Kennzeichnungsmitteln in nachfolgenden Verarbeitungsschritten oftmals störend und muss beispielsweise bei einem Lackieren oder dergleichen vor dem entsprechenden Verarbeitungsschritt entfernt werden. Gerade auch bei mechanischen Einflüssen werden die Kennzeichnungen oftmals beschädigt, sodass eine Erkennung oder Identifizierung der Werkstücke nicht oder nur schwer möglich ist.

Auch bei einer Montage ist die Zuordnung von Werkstücken dann kaum noch möglich. Gerade auch bei ähnlichen Werkstücken kommt es ohne ausreichende Kennzeichnung zu Verwechslungen, sodass die Werkstücke vertauscht oder lageverkehrt montiert werden. Gerade bei hohem Arbeitsaufkommen, komplexen Aufträgen und optisch ähnlichen Werkstücken, die innerhalb einer Verarbeitung Oberflächenveränderungen zum Beispiel durch Beschichten, Furnieren, Lackieren und dergleichen erfahren, ist ein fehlerfreies Handhaben dann kaum noch zu realisieren.

Analoges gilt auch für den Versand, in der Kommissionierung oder der Endmontage, bei denen es ohne ausreichende Kennzeichnung zu Fehl- und Falschlieferungen sowie Fehlmontagen kommen kann. Eine übergeordnete Prozessverfolgung ist, wenn überhaupt, nur mit hohem Aufwand möglich.

Im Bereich der holzverarbeitenden Produktion mit weitestgehend gleichen Prozessschritten werden vereinzelt in industriell zu fertigenden Hohlwerkstücken, RFID-Tags in den Hohlräumen angeordnet. Für Massiv- oder Vollwerkstücke, die keinen entsprechenden Hohlraum zur Anordnung der RFID-Tags aufweisen, eignet sich dieses Verfahren nicht.

Entsprechende RFID-Anwendungen sind beispielsweise aus der DE 10 2007 042 647 A1 oder auch der DE 10 2005 041 221 A1 bekannt.

Es ist deshalb eine Aufgabe der vorliegenden Erfindung, ein Verfahren und eine Vorrichtung zur Kennzeichnung und zur Verarbeitung eines Vollmaterials, insbesondere eines Massivplattenwerkstücks zu schaffen, bei welchem eine Kennzeichnung von außen an dem Werkstück angebracht wird, ohne dass dadurch nachfolgende Bearbeitungsschritte nachteilig beeinflusst werden.

Diese und weitere Aufgaben werden gelöst durch die Verfahren mit den Merkmalen des Anspruchs 1, die Vorrichtung mit den Merkmalen des Anspruchs 9 und die Verwendung mit den Merkmalen des Anspruchs 14.

Die technische Lehre der Erfindung sieht vor, dass ein Verfahren zur Kennzeichnung von Massivplattenwerkstücken, insbesondere von Massivholzplatten, die Schritte Einbringen einer Ausnehmung in das Massivplattenwerkstück, Anordnen eines RFID-Tags an der Ausnehmung, sodass der RFID-Tag ohne wesentlichen Überstand in der Ausnehmung angeordnet ist, und Anbringen einer Beschichtung im Bereich des RFID-Tags, sodass der RFID-Tag zumindest teilweise gegenüber der Umgebung geschützt ausgebildet ist, umfasst.

Als Massivplattenwerkstück werden im Zusammenhang mit der Erfindung plattenförmige, massive Werkstücke aus Holz, Glas, Kunststoff, Verbundwerkstoffen und/oder anderen Materialien bezeichnet. Unter dem Begriff Holz werden im Zusammenhang mit der Erfindung unter anderem Vollholz, Faserholz, Holzverbundwerkstoffe oder andere Materialien zusammengefasst. Unter dem Begriff Massivplattenwerkstück fallen auch Vollmaterialplattenwerkstücke aus Verbundmaterial, sogenannte Verbundvollmaterialplatten.

RFID (engl. Radio Frequency Identification) steht für eine Kennzeichnung bzw. eine Identifizierung mit Hilfe von elektromagnetischen Wellen. Ein RFID-System umfasst üblicherweise einen oder mehrere Transponder, welche an dem zu kennzeichnenden Gegenstand, d. h. vorliegend an dem Massivplattenwerkstück, angebracht werden, sowie einem Lesegerät zum Auslesen der Transponder-Kennung. Eine Baueinheit des Transponders wird auch als Tag bezeichnet. Der RFID-Tag ist in einer Ausgestaltung auf einer Trägerfolie angeordnet, welche auch die mit dem Transponder verbundene Antenne aufnimmt. Die Ausdehnung der Trägerfolie kann dabei die Größe der Ausnehmung überragen, wobei jedoch die Trägerfolie nur eine geringe Dicke aufweist, sodass die Trägerfolie eine Handhabung des Werkstücks nicht beeinträchtigt.

Ein RFID-Tag erlaubt eine individuelle Kennzeichnung verschiedener Massivplattenwerkstücke. Dabei kann eine gewünschte Information betreffend das Massivplattenwerkstück, dessen Verarbeitung und/oder dessen Bestimmung nach der Verarbeitung auf dem RFID-Tag bereits vor einem Anbringen des RFID-Tags an dem Massivplattenwerkstück gespeichert oder abgelegt werden.

Durch Anbringen des RFID-Tags in einer Ausnehmung stört der Tag den Prozessablauf zur Verarbeitung des Massivplattenwerkstücks, insbesondere der Massivholzplatte, nicht oder zumindest nicht wesentlich.

Durch das Aufbringen einer Beschichtung wird der RFID-Tag gegen die Umwelt geschützt. Die Beschichtung ist dabei bevorzugt als sogenannte Anleimkante ausgebildet. Die Beschichtung ist so ausgebildet, dass die Funktionalität des RFID-Tags nicht oder nur unwesentlich beeinflusst ist.

In einer Ausführungsform der vorliegenden Erfindung ist vorgesehen, dass die Ausnehmung in einer Seitenfläche des Massivplattenwerkstücks eingebracht wird. Als Seitenfläche wird dabei im Zusammenhang mit der Erfindung eine Schmalseite eines plattenförmigen Werkstücks oder dergleichen bezeichnet. Durch Einbringen der Ausnehmung in einer Seitenfläche ist es möglich, die Werkstücke platzsparend übereinander gestapelt zu lagern, ohne dass durch die Lagerung die RFID-Tags beschädigt werden. Außerdem ist auch im gelagerten Zustand ein einfaches Auslesen von Informationen aus dem RFID-Tag möglich. Ein Lagern erfolgt in einer Ausgestaltung auf einer Logistikkomponente. Als Logistikkomponente werden im Zusammenhang mit der Erfindung Vorrichtungen zum Lagern und/oder Transportieren der Werkstücke bezeichnet, beispielsweise Transportbehälter, Paletten, Wagen oder dergleichen. In einer Ausgestaltung wird die Logistikkomponente ebenfalls mit einer Kennzeichnung versehen, beispielsweise wird an der Logistikkomponente ebenfalls ein RFID-Tag angebracht. Die Logistikkomponente weist in einer Ausgestaltung eine Schreib-/Lese-Einheit auf.

In einer anderen Ausführungsform der vorliegenden Erfindung ist vorgesehen, dass die Ausnehmung mittels Prägen eingebracht wird. Unter dem Begriff Prägen wird dabei im Zusammenhang mit der Erfindung auch ein Lochen verstanden. Ein Prägen kann passiv oder aktiv erfolgen, d. h. je nach Gestaltung werden das Werkstück und/oder ein Werkzeug zum Einbringen der Ausnehmung bewegt. Die Auswahl des Verfahrens erfolgt vorzugsweise in Abhängigkeit der Bauform, der benötigten Vertiefung und/oder des Materials.

In noch einer anderen Ausführungsform der vorliegenden Erfindung ist vorgesehen, dass die Ausnehmung in das Massivplattenwerkstück an eine definierte Position eingebracht wird und die Informationen über die Position auf dem einzubringenden RFID-Tag abgelegt werden. Durch die definierte Position der Ausnehmung ist ein Referenzpunkt für eine weitere Verarbeitung des Massivplattenwerkstücks gegeben, welcher in nachfolgenden Verarbeitungsschritten ausgelesen werden kann und so auf einfache Weise zur Verfügung gestellt wird.

Wie vorstehend beschrieben, sieht eine Ausführungsform der vorliegenden Erfindung vor, dass der eingebrachte RFID-Tag mit einer Beschichtung zum Schutz gegen die Umgebung beschichtet wird. Auf diese Weise ist der RFID-Tag sandwichartig zwischen Massivplattenwerkstück und Beschichtung geschützt angeordnet. Die Beschichtung kann eine beliebige Beschichtung sein, welche die Funktionalität des RFID-Tags nicht oder nur unwesentliche beeinflusst. In einer bevorzugten Ausführungsform ist die Beschichtung eine Anleimkante oder dergleichen, die an der Kante, an dem der RFID-Tag angebracht wird, aufgebracht oder aufgeklebt wird. Die Kante kann aus einem geeigneten Material, beispielsweise Kunststoff oder Holz ausgebildet sein. Die Dicke der Anleimkante ist dabei so ausgebildet, dass die Funktionalität des RFID-Tags nicht oder nur unwesentlich beeinflusst ist. Beispielsweise weist die Anleimkante in flexibler Ausführung eine Dicke von bis zu 3 mm, bevorzugt von bis zu 2 mm und weiter bevorzugt von nicht mehr als 1,5 mm auf. Andere Dicken können vorgesehen werden. Ferner sind auch stabförmige Kanten, die nur gering flexible ausgebildet sind, vorgesehen. Diese werden nicht von einem Rollenspender abgewickelt, sondern einzeln oder aus einem Stabmagazin zugeführt.

Die technische Lehre der Erfindung sieht weiter vor, dass ein Verfahren zur Verarbeitung von Massivplattenwerkstücken, insbesondere von Massivholzplatten, mit einem RFID-Tag, insbesondere einem in einer Ausnehmung des Massivplattenwerkstücks angeordneten RFID-Tags, die Schritte Einlesen von auf dem RFID-Tag abgelegten Verarbeitungsinformationen, Verarbeiten des Massivplattenwerkstücks unter Berücksichtigung der eingelesenen Verarbeitungsinformationen und Ablegen von Informationen umfassend Informationen über den Verarbeitungsvorgang, auf dem RFID-Tag umfasst. Als Verarbeiten wird im Zusammenhang mit der Erfindung jegliche Art der Verarbeitung, Bearbeitung, des Transports zwischen einzelnen Verarbeitungsstationen oder dergleichen bezeichnet, durch welche sich beispielsweise eine Form, eine Beschaffenheit der Oberfläche, ein Lagerort oder andere Eigenschaften des Werkstücks ändern. Zu jedem Zeitpunkt der Produktion ist es dabei möglich, Informationen für einen Verarbeitungs- und/oder Produktionsschritt durch Auslesen des RFID-Tags zu erhalten, den Verarbeitungsschritt entsprechend dieser Informationen durchzuführen und die geänderten Informationen über das Werkstück wieder auf diesem abzulegen.

Die technische Lehre der Erfindung sieht weiter vor, dass Verfahren zum mehrstufigen Verarbeiten von Massivplattenwerkstücken in einem Produktionsprozess, insbesondere von Massivholzplatten in einem holzverarbeitenden Produktionsprozess, umfassend die Schritte: Bereitstellen eines Massivplattenwerkstücks und mehrstufige Verarbeitung des Massivplattenwerkstücks, vorgesehen ist, dass vor dem Verarbeiten eine Ausnehmung in das Massivplattenwerkstück eingebracht wird und ein RFID-Tag in die Ausnehmung so eingesetzt wird, dass der RFID-Tag ohne wesentlichen Überstand in der Ausnehmung angeordnet ist. Insbesondere bei einer Holzverarbeitung werden als Ausgangsmaterialien üblicherweise Großplatten verwendet, welche in eine Mehrzahl an Werkstücken zerteilt werden. Durch das erfindungsgemäße Verfahren werden die Werkstücke nach dem Abtrennen gekennzeichnet, sodass sie dann beispielsweise an einem definierten Übergabeplatz zwischengelagert werden können. Sobald ausreichend Werkstücke mit bestimmten Eigenschaften an dem Übergabeplatz vorliegen, wird vorzugsweise ein Transport an eine nachfolgende Bearbeitungsstation veranlasst. Diese Überwachung der Übergabestation erfolgt beispielsweise mittels eines Fertigungsleitsystems.

In einer Ausführungsform der vorliegenden Erfindung ist vorgesehen, dass der RFID-Tag vor dem Einbringen in die Ausnehmung mit einer Initialprogrammierung programmiert ist. Auf dem RFID-Tag sind beispielsweise Informationen über eine Verarbeitungsaufgabe und/oder eine Bestimmung des Werkstücks abgelegt. Der RFID-Tag dient somit auch dazu, bestimmte Aufgaben an die Verarbeitungsstationen zu übermitteln.

In einer Ausführungsform der Erfindung ist vorgesehen, dass an mindestens einer Verarbeitungsstufe, bevorzugt an allen Verarbeitungsstufen, eine bidirektionale Kommunikation mit dem RFID-Tag durchgeführt wird. Als bidirektionale Kommunikation wird dabei ein Lesen von Information, welches vorzugsweise zumindest vor der Verarbeitung erfolgt, und ein Schreiben von Informationen, welches üblicherweise nach einer Verarbeitung erfolgt, bezeichnet. Beim Schreiben werden vorzugsweise Informationen über die durchgeführte Verarbeitung der jeweiligen Verarbeitungsstufe auf dem RFID-Tag gespeichert.

In einer bevorzugten Ausführungsform der vorliegenden Erfindung ist vorgesehen, dass in einer Verarbeitungsstufe, bevorzugt in einer direkt dem Einbringen des RFID-Tags folgenden Verarbeitungsstufe, eine Verarbeitung durchgeführt wird, mit welcher der RFID-Tag zumindest teilweise, bevorzugt komplett gegenüber einer Außenumgebung verdeckt wird, sodass der RFID-Tag zumindest teilweise vor äußeren Einflüssen geschützt ist, ohne die Kommunikation wesentlich zu beeinträchtigen. Dabei ist in einer Ausgestaltung vorgesehen, den RFID-Tag derart zu verdecken, dass der RFID-Tag auch nach einer endgültigen Verarbeitung und Auslieferung des Werkstücks an diesem verbleiben kann.

Die technische Lehre der Erfindung sieht weiter vor, dass eine Einrichtung zur Kennzeichnung von Massivplattenwerkstücken, insbesondere von Massivholzplatten, umfassend eine Einheit zum Anbringen mindestens eines RFID-Tags an der Massivholzplatte, Mittel zum Einbringen einer Ausnehmung in das Massivplattenwerkstück und zum Anordnen eines RFID-Tags an der Ausnehmung, sodass der RFID-Tag ohne wesentlichen Überstand in der Ausnehmung angeordnet ist, vorgesehen sind.

Die Einrichtung umfasst vorzugsweise eine Prägestation, um vor dem Anbringen des RFID-Tags von außen eine Ausnehmung in das Massivplattenwerkstück einzubringen, sodass ein RFID-Tag ohne Überstand in die Ausnehmung einbringbar ist. Als Prägestation wird dabei im Zusammenhang mit der Erfindung eine Station zum mechanischen Einbringen einer Ausnehmung, insbesondere einer Vertiefung und/oder eines Lochs, bezeichnet. Die Prägestation kann dabei je nach Material des Werkstücks und/oder Anforderungen an dessen Oberfläche aktiv oder passiv gestaltet sein.

In einer Ausführungsform der vorliegenden Erfindung ist weiter vorgesehen, dass eine Spendeeinheit vorgesehen ist, um den RFID-Tag in die Ausnehmung ohne Überstand einzubringen. Die Einbringeinheit umfasst in einer Ausgestaltung eine Spendeeinheit, welche vorzugsweise nach Art eines Etikettenspenders gestaltet ist. Mittels der Spendeeinheit sind RFID-Tags, welche auf einer Trägerfolie angeordnet sind, derart an dem Werkstück anbringbar, dass zumindest der RFID-Tag in der Ausnehmung angeordnet ist. In einer Ausgestaltung umfasst die Spendeeinheit Mittel, durch welche eine Vorprogrammierung der RFID-Tags möglich ist, sodass beim Aufbringen des RFID-Tags eine individuelle Kennzeichnung an dem Werkstück anbringbar ist.

Die technische Lehre der Erfindung sieht weiter vor, dass bei einer Kantenanleimstation zum Anleimen von Kanten an ein Werkstück, insbesondere an ein plattenförmiges Werkstück, zur Fertigung von Möbelstücken, umfassend eine Kantenzuführeinrichtung zum Zuführen von Kanten zu dem Werkstück und eine Kantenverbindungseinrichtung zum Verbinden der zugeführten Kanten mit dem Werkstück, eine erfindungsgemäße Einrichtung vorgesehen ist. Mit der Kantenanleimstation werden Schutzkanten, insbesondere aus Kunststoff oder dergleichen, an Bearbeitungskanten des Werkstücks angebracht, um auf diese Weise die Kanten optisch ansprechend zu gestalten und diese zu schützen. Gemäß einer vorteilhaften Ausführungsform ist bei der Kantenanleimstation ein RFID-Tag in einer Ausnehmung unterhalb der Schutzkante anbringbar.

In einer Ausführungsform der vorliegenden Erfindung ist vorgesehen, dass die Einrichtung eine Bearbeitungsstation, insbesondere eine Kantenfrässtation aufweist. Die Einrichtung weist zur Einbringung von Ausformungen an dem Werkstück ein Prägesystem oder dergleichen auf. Vorgeschaltet zu dem Prägesystem ist die Kantenfrässtation, welche die entsprechenden Kanten des Werkstücks bearbeitet. Die Plattenkanten werden bevorzugt mit einem Fräser im kontinuierlichen Prozess bearbeitet. Dabei werden auch feinste Ausreißer im Plattenmaterial beseitigt, welche die Optik einer Beschichtung des Werkstücks, beispielsweise eine Kunststoffbeschichtung, Furniere etc., negativ beeinträchtigen. Dieser Vorgang ist vorteilhaft, da durch das Sägen der Plattenwerkstücke mittels Formsägen derartige Ausreißer nie gänzlich ausgeschlossen werden können. Diese Ausreißer werden durch einen entsprechenden Materialabtrag beseitigt.

In einer weiteren Ausführungsform der vorliegenden Erfindung ist vorgesehen, dass die Bearbeitungsstation eine Vorbehandlungsstation bzw. Verbindungsstation umfasst. Mit der Vorbehandlungsstation bzw. Verbindungsstation können die Werkstückkanten, an welche RFID-Tags angebracht sind und die mit einer Anleimkante versehen werden sollen, für das nachfolgende Anbringen der Anleimkanten vorbereitet werden bzw. mit einem Verbindungsmedium versehen werden, beispielsweise mit Leim, einem Kleber oder dergleichen.

Noch eine weitere Ausführungsform der vorliegenden Erfindung sieht vor, dass eine TAG-Entfernungseinheit vorgesehen ist, um mit dem Werkstück zugeführte RFID-Tags vor Durchlauf der Bearbeitungsstation zu entfernen. Die mit einem RFID-Tag zu versehenen Werkstücke, werden bevorzugt über eine Fördereinrichtung zugeführt. Die Werkstücke können vor Durchlauf der Bearbeitungsstation bereits mit einem RFID-Tag versehen sein. Mit der Einrichtung werden entsprechende Informationen für die Bearbeitung aus dem RFID-Tag ausgelesen. Falls der RFID-Tag an der zu bearbeitenden Kante angeordnet ist, würde dieser beim Bearbeiten der Kante, genauer einem Abfräsen der Kante, zerstört werden. Entsprechend ist vorgesehen, dass der RFID-Tag vor Durchlauf durch die Bearbeitungsstation mittels der TAG-Entfernungseinheit entfernt wird. In einer Ausgestaltung ist vorgesehen, dass der entfernte RFID- Tag anschließend wieder an dem Werkstück angebracht wird.

Die Erfindung schließt weiter die technische Lehre ein, dass bei einer Vorrichtung zur Verarbeitung von Massivplattenwerkstücken, insbesondere von Massivholzplatten, umfassend: eine Bereitstellungseinheit zum Bereitstellen eines Massivplattenwerkstücks und mehrere Verarbeitungseinheiten zur mehrstufigen Verarbeitung des Massivplattenwerkstücks Mittel zu Durchführung eines erfindungsgemäßen Verfahrens vorgesehen sind.

Vorzugsweise umfasst die Vorrichtung mindestens eine erfindungsgemäße Einrichtung, sodass eine angelieferte Großplatte in Werkstücke zerteilt und die Werkstücke vor einer Verarbeitung individuell kennzeichenbar sind.

In einer bevorzugten Ausführungsform der vorliegenden Erfindung ist vorgesehen, dass eine erfindungsgemäße Kantenanleimstation vorgesehen ist. Bevorzugt ist die Kantenanleimstation zum zumindest teilautomatischen Anbringen von Anleimkanten an die Werkstücke ausgebildet.

Die Aufgabe der Erfindung wird weiter gelöst durch eine Verwendung eines RFID-Tags zur Kennzeichnung von Massivplatten in einem mehrstufigen Verarbeitungsprozess, insbesondere bei Massivplatten ausgewählt aus der Gruppe umfassend Massivplatten aus Holz, Faserholz, Holzverbundstoffen, Kunststoff, insbesondere für den Innenausbau oder für Möbelstücke. Vorzugsweise ist der RFID-Tag an einer Seitenfläche der Massivplatte, insbesondere einer Ausnehmung an der Seitenfläche der Massivplatte, angeordnet.

Weiter sieht die technische Lehre der vorliegenden Erfindung vor, dass bei einem Massivplattenwerkstück, insbesondere einem Massivholzwerkstück, vorgesehen ist, dass nach dem Bereitstellen von außen eine Ausnehmung in das Massivplattenwerkstück eingebracht wird, sodass der RFID-Tag ohne Überstand in die Ausnehmung einbringbar ist, und ein RFID-Tag in die Ausnehmung ohne Überstand eingebracht wird. Das Werkstück wird beispielsweise durch Zerteilen einer Großplatte bereitgestellt. Das Massivplattenwerkstück ist nach der Kennzeichnung direkt weiter bearbeitbar, lagerbar oder an einen anderen Ort bringbar.

Weitere, die Erfindung verbessernde Maßnahmen, sind in den Unteransprüchen angegeben oder ergeben sich aus der nachfolgenden Beschreibung von mindestens einem Ausführungsbeispiel der Erfindung, welches in den Figuren schematisch dargestellt ist. Sämtliche aus den Ansprüchen, der Beschreibung oder der Zeichnung hervorgehenden Merkmale und/oder Vorteile, einschließlich konstruktiver Einzelheiten, räumliche Anordnungen und/oder Verfahrensschritte können sowohl für sich als auch in verschiedensten Kombinationen erfindungswesentlich sein.

In den Figuren ist Folgendes dargestellt:
- Fig. 1: zeigt schematisch in einer Perspektivansicht ein Massivplattenwerkstück mit einem RFID-Tag
- Fig. 2: zeigt schematisch in einer geschnittenen Seitenansicht das Werkstück nach Fig. 1,
- Fig. 3: zeigt schematisch in einer Draufsicht einen Ausschnitt einer erfindungsgemäßen Vorrichtung, welche nachfolgend zu einer Zuschnittstation vorgesehen ist,
- Fig. 4: zeigt schematisch in einer Draufsicht eine Kantenanleimstation der Vorrichtung,
- Fig. 5: zeigt schematisch in einer Draufsicht eine Übergabevorrichtung der Vorrichtung und
- Fig. 6: zeigt schematisch in einer Ansicht eine erfindungsgemäße Kantenanleimstation.

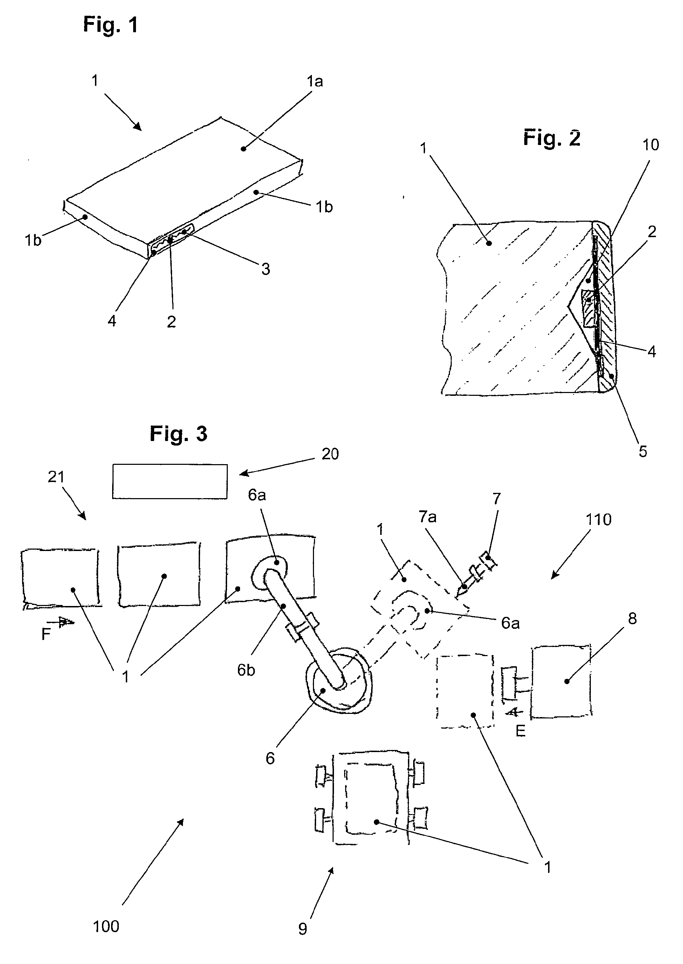

Fig. 1 zeigt schematisch in einer Perspektivansicht ein Massivplattenwerkstück 1 mit einem RFID-Tag 2. Das Massivplattenwerkstück 1 ist vorliegend aus einem Holzwerkstoff ausgebildet. In einer Draufsicht weist das Massivplattenwerkstück 1 eine Rechteckform auf. Entsprechend weist das Massivplattenwerkstück zwei Hauptflächen 1a auf, nämlich eine Vorderseite und eine Rückseite, von denen nur die Vorderseite sichtbar ist. Außerdem weist das Massivplattenwerkstück vier Seitenflächen 1b auf, von denen hier zwei Seitenflächen dargestellt sind. An einer der Seitenflächen 1b ist in einer hier nicht sichtbaren Ausnehmung ein RFID-Tag 2 angeordnet. Der RFID-Tag 2 weist eine Antenne 3 für eine Kommunikation, beispielsweise eine Informationsübertragung, auf. Zum vorteilhaften Handhaben ist der RFID-Tag 2 auf einem Trägermaterial angeordnet, welches in der Fig. 1 als Trägerfolie 4 ausgebildet ist. In dem dargestellten Ausführungsbeispiel ist die Antenne 3 ebenfalls auf der Trägerfolie 4 angeordnet. Der RFID-Tag 2 ist so in der hier nicht sichtbaren Ausnehmung angeordnet, dass dieser nicht oder nicht wesentlich über die Ausnehmung herausragt, wie in Fig. 2 genauer zu erkennen ist.

Fig. 2 zeigt schematisch in einer geschnittenen Seitenansicht das Massivplattenwerkstück 1 nach Fig. 1. Das Massivplattenwerkstück 1, welches als plattenförmiger Quader ausgebildet ist und hier nur ausschnittsweise dargestellt ist, weist in einem Bereich seiner Seitenfläche 1b eine Ausnehmung 10 auf. In dieser Ausnehmung 10 ist der RFID-Tag 2 im Wesentlichen angeordnet, sodass dieser nicht oder nicht wesentlich über die Ausnehmung 10 herausragt. Der RFID-Tag 2 ist auf der Trägerfolie 4 aufgebracht und so angeordnet, dass die Trägerfolie 4 etwa bündig mit der entsprechenden Seitenfläche 1b abschließt. Somit ist der RFID-Tag 2 von der Ausnehmung 10 und der Trägerfolie 4 umgeben. Eine Materialstärke der Trägerfolie 4 ist so gering, dass ein Anbringen der Trägerfolie 4 außerhalb der Ausnehmung 10 eine Verarbeitung des Werkstücks 1 nicht beeinträchtigt.

An der Seitenfläche 1b, welche die Ausnehmung 10 aufweist, ist eine Schicht 5 aufgebracht, welche den RFID-Tag 2 samt Trägerfolie 4 mit dem Massivplattenwerkstück 1 sandwichartig umgibt, sodass der RFID-Tag 2 zwischen Massivplattenwerkstück 1 und Schicht 5 gegenüber einer Umgebung abgedeckt ist. Diese Abdeckung ist so ausgebildet, dass die Kommunikation von und zu dem RFID-Tag 2 nicht oder nicht wesentlich beeinflusst ist. Die Schicht 5 kann eine beliebige Schicht sein, wie beispielsweise eine Lackierungsschicht, ein weiteres Bauteil, eine Kante, eine Leiste, eine Klebschicht, eine Farbschicht oder dergleichen. Die Schicht deckt den RFID-Tag 2 optisch ab und schützt den RFID-Tag 2 auch vor Zerstörung.

Fig. 3 zeigt schematisch in einer Draufsicht einen Ausschnitt einer Vorrichtung 100, welche nachfolgend zu einer Zuschnittstation 20 vorgesehen ist. Die dargestellte Vorrichtung 100 umfasst eine Handlingeinheit 6 und eine Einrichtung 110 zur Kennzeichnung von Massivplattenwerkstücken mit einer Einbringeinheit 7 und einer Spendestation B.

In der Zuschnittstation 20 werden Massivwerkstückrohlinge in entsprechende Massivplattenwerkstücke 1 zugeschnitten. Insbesondere bei der Holzverarbeitung werden Rohlinge beispielsweise als Großplatten angeliefert, welche durch die Zuschnittstation 20 in Werkstücke 1 getrennt werden. In dem dargestellten Ausführungsbeispiel ist nach der Zuschnittstation 20 eine Lagereinheit 21 vorgesehen, in welcher die Massivplattenwerkstücke 1 gelagert werden. Dabei kann die Lagereinheit 21 eine Fördereinrichtung umfassen, welche die Massivplattenwerkstücke 1, wie durch den Pfeil F angedeutet, fördert, beispielsweise zu der Handlingeinheit 6.

Die Handlingeinheit 6 kann als Roboter oder dergleichen ausgebildet sein.

Diese dient dazu, die Massivplattenwerkstücke 1 von der Lagereinheit 21 zu handhaben und insbesondere weiterzuleiten. Hierzu weist die Handlingeinheit 6 eine entsprechende Greifeinheit 6a auf, welche vorliegend als Saugeinheit ausgebildet ist. Durch entsprechendes Ansaugen mittels Unterdruck wird das zu handhabende Massivplattenwerkstück 1 gehalten und kann durch Bewegen eines entsprechenden Greifarms 6b oder dergleichen, gehandhabt werden. Die Handlingeinheit 6 ist in einer Position dargestellt, in welcher diese ein Massivplattenwerkstück 1 greift. Schematisch ist mittels gestrichelten Linien eine zweite Position dargestellt, in welcher die Handlingeinheit 6 um eine aus der Blattebene senkrecht herausführende Achse gedreht ist, sodass das Massivplattenwerkstück 1 an die Einbringeinheit 7 angrenzt. Dabei grenzt das Massivplattenwerkstück 1 so definiert an die Einbringeinheit 7 an, dass die Ausnehmung 10 gemäß Fig. 2 in die Seitenfläche 1b eingebracht werden kann.

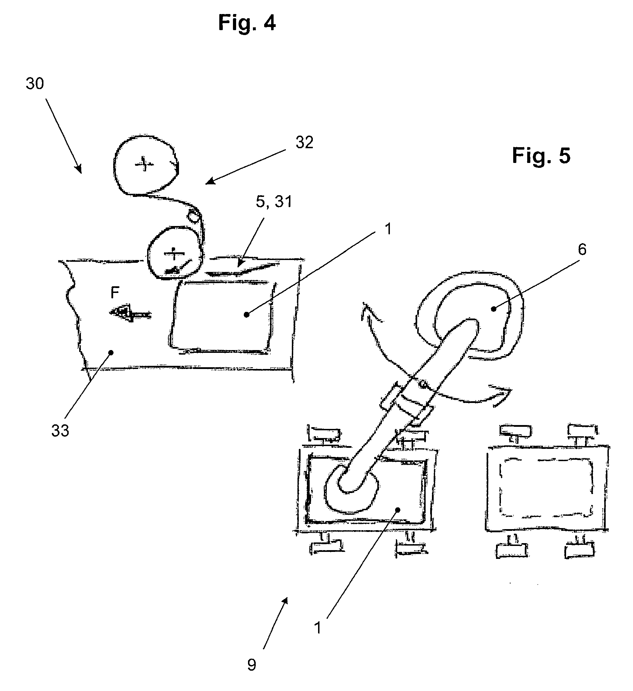

Die Einbringeinheit 7 ist in der Fig. 3 als Präge- oder Locheinheit ausgebildet und weist ein Werkzeug 7a zum Einbringen der Ausnehmung 10 in die Seitenfläche 1b auf. Mit dem Werkzeug 7a bringt die Einbringeinheit 7 die Ausnehmung 10 von außen in die Seitenfläche 1b des Massivplattenwerkstücks 1 ein. Nach dem Einbringen der Ausnehmung 10 wird das Massivplattenwerkstück 1 weitergeleitet, wie durch das gestrichelte Rechteck dargestellt. Die Weiterleitung erfolgt gemäß der Fig. 3 an die Spendestation B. An der Spendestation 8 wird der RFID-Tag 2 an die Seitenfläche 1b, genauer in die Ausnehmung 10 der Seitenfläche 1b angebracht, wir durch den Pfeil E dargestellt. Wenn der RFID-Tag 2 an das Massivplattenwerkstück 1 angebracht ist, wird das Massivplattenwerkstück 1 an eine Übergabestation 9 weitergeleitet. Dort wird das Massivplattenwerkstück 1 zwischengelagert und wird dann an nachfolgende Verarbeitungsstationen weitergegeben, was in Fig. 4 dargestellt ist. Die Vorrichtung 100 umfasst weiter beispielsweise eine Kantenanleimstation 30.

Fig. 4 zeigt schematisch in einer Draufsicht eine Kantenanleimstation 30 der Vorrichtung 100. An der Kantenanleimstation 30 werden Schichten 5, genauer Kanten oder Leisten 31 auf die Seitenflächen 1b aufgebracht. Diese werden beispielsweise über eine Zuführeinheit 32 an die Seitenflächen 1b zugeführt und dann mittels Leim oder mittels anderer Befestigungsmittel mit den Seitenflächen 1b verbunden. Dabei wird der an dem Massivplattenwerkstück 1 angebrachte RFID-Tag 2 durch die Schichten 5 bedeckt, sodass der RFID-Tag 2 sandwichartig zwischen Massivplattenwerkstück 1 und Schicht 5 angeordnet ist. Die Vorgänge in der Kantenanleimstation 30 können kontinuierlich ablaufen, wobei die Schichten 5 kontinuierlich zugeführt werden und die Massivplattenwerkstücke 1 auf einer Fördereinheit 33 kontinuierlich gefördert werden, wie durch den Pfeil F dargestellt.

Fig. 5 zeigt schematisch in einer Draufsicht eine Übergabestation 9 der Vorrichtung. Zu und von der Kantenanleimstation 30 gelangen die Massivplattenwerkstücke 1 über die Übergabestationen 9. Das Fördern der Massivplattenwerkstücke 1 erfolgt über eine Handlingeinheit 6, wobei das Fördern je nach Anforderung beliebig ausgeführt werden kann. Das Fördern mittels der Handlingeinheit 6 erfolgt analog zu dem zu Fig. 3 beschrieben Verfahren. Über die als Roboter ausgebildete Handlingeinheit 6 kann das Massivplattenwerkstück 1 definiert gehandhabt werden. Alternativ und/oder zusätzlich können die Massivplattenwerkstücke 1 auf Logistikkomponenten für einen Transport angeordnet sein.

Vorzugsweise sind alle Stationen oder Verarbeitungseinheiten zur Kommunikation mit dem RFID-Tag 2 ausgebildet. Die Kommunikation erfolgt dabei bidirektional. Dabei ist die bevorzugte Reihenfolge an jeder Verarbeitungs- oder Handhabungsstufe: Lesen der RFID-Informationen aus dem RFID-Tag 2 vor dem Verarbeitungs- oder Handhabungsschritt, Durchführen des Verarbeitungs- oder Handhabungsschrittes und Schreiben der RFID-Informationen nach dem Verarbeitungs- oder Handhabungsschritt auf den RFID-Tag 2. Auf diese Weise ist gewährleistet, dass alle relevanten Informationen für die Verarbeitung und/oder das Handhaben des Massivplattenwerkstücks 1 stets abrufbar und aktualisiert sind. Nach der kompletten Bearbeitung des Massivplattenwerkstücks 1 stehen die Informationen zum Beispiel für Montagearbeiten oder Wartungsarbeiten auch nach der Bearbeitung zur Verfügung.

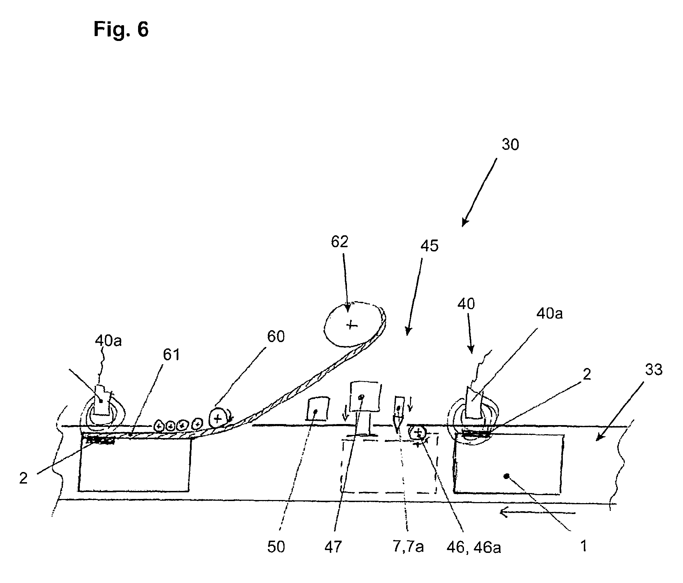

Fig. 6 zeigt schematisch in einer Ansicht einen Ausschnitt einer erfindungsgemäßen Kantenanleimvorrichtung oder Kantenanleimstation 30. Die Kantenanleimstation 30 umfasst die Fördereinheit 33, mit welcher Werkstücke in Form von Massivplattenwerkstücken 1 der Kantenanleimstation 30 zugeführt werden. Die Fördereinheit 33 ist als Förderband oder dergleichen ausgebildet, um die Werkstücke kontinuierlich zu fördern. Die Werkstücke liegen flach auf der Fördereinheit 33 auf. Dabei weisen die zugeführten Massivplattenwerkstücke 1 zur Kennzeichnung einen RFID-Tag 2 auf. Die auf dem RFID-Tag 2 abgelegten Daten werden über eine Kommunikationseinrichtung 40, die eine bidirektionale Kommunikationsschnittstelle aufweist, ausgelesen. In der Fig. 6 ist dargestellt, wie ein sogenannter Reader 40a - auch als Lesegerät bezeichnet, die an den Werkstücken 1 angebrachten RFID-Tags 2 in einem kontinuierlichen Einlaufprozess der Werkstücke 1 ausliest. Die ausgelesenen Daten werden mittels eines hier nicht dargestellten Zwischenspeichers akkumuliert und ggf. an eine übergeordnete Rechnereinheit (ebenfalls nicht dargestellt) weitergeleitet oder übertragen. Vor der weiteren Bearbeitung kann der RFID-Tag 2 mittels einer hier nicht dargestellten TAG-Entfernungseinheit von dem Werkstück 1 entfernt werden. Im weiteren Verlauf des Verarbeitungsprozesses durchläuft das Werkstück 1 eine Bearbeitungsstation 45, die unter anderem eine Kantenfrässtation 46 mit einem entsprechenden Kantenfräser 46a umfasst. Mit dem Kantenfräser 46a werden die entsprechenden Kanten des Werkstücks 1 mittels Materialabtrag bearbeitet. So die TAG-Entfernungseinheit nicht zwingend integrierter Bestandteil der Station 7 sein muss, wird der ausgelesene TAG durch den Kantenfräser 46a entfernt. Sofern, anders als in Fig. 6 dargestellt, keine separate TAG-Entfernungseinheit vorgesehen ist, wird der ausgelesenen RFID-Tag 1 durch den Kantenfräser 46a entfernt. Die Bearbeitungsstation 45 umfasst weiter eine Einbringeinheit 7, welche ein als Prägesystem ausgebildetes Werkzeug 7a umfasst, um in die bearbeitete Kante des Werkstücks 1 eine Ausnehmung zur Aufnahme des RFID-Tags 2 zu formen. Die Prägestation oder das Prägesystem wird entsprechend des verwendeten Materials des Werkstücks 1 eingesetzt. Ist eine Ausnehmung in dem Werkstück 1 ausgeformt, wird das Werkstück 1 zu einem Applikator 47 gefördert, insbesondere in einem kontinuierlichen Durchlauf. Teil des Applikators kann ein integrierter Reader (nicht dargestellt) sein, der die relevanten Daten bereits vor dem Spenden des RFID-Tags 2 auf diesem überträgt. Der Applikator 47 bringt einen RFID-Tag 2 in die Ausnehmung ein. Dabei ist in einer Ausgestaltung vorgesehen, dass der zuvor entfernte RFID-Tag 2 wieder angebracht wird. In anderen Ausgestaltungen wird der RFID-Tag 2 ersetzt. Nach Einbringen des RFID-Tags 2 in die Ausnehmung wird das Werkstück 1 weiter zu einer Vorbehandlungsstation bzw. Verbindungsstation 50 gefördert. In der Vorbehandlungsstation bzw. Verbindungsstation 50 wird das Werkstück 1, insbesondere die entsprechende Kante des Werkstücks 1, auf das Anbringen einer Anleimkante vorbereitet. Nach Durchlauf der Vorbehandlungsstation 50 wird das Werkstück 1 weiter gefördert. Dabei wird mittels Druckrollen 60 eine Leimkante 61 auf die Werkstückkante gepresst und so mit der Werkstückkante verbunden. Die Leimkante 61 kann als kontinuierlich zugeführte Leimkante 61 ausgebildet sein. Diese kontinuierliche Leimkante 61 wird über einen entsprechenden Leimkantenspender 62 kontinuierlich zugeführt. Ist die Werkstückkante mit einer entsprechenden Leimkante 61 versehen, wird die Leimkante 61 geschnitten. Das Aufbringen der Leimkante 61 erfolgt, wie bevorzugt alle Schritte, kontinuierlich, das heißt während der Förderung des Werkstücks 1. Nachdem die Leimkante 61 an dem Werkstück 1 angebracht ist, wird mittels einem weiteren Reader 40a, der vorliegend zur bidirektionalen Kommunikation ausgebildet ist, der RFID-Tag 2 der Werkstückplatte mit weiteren Informationen beschrieben, sodass das Werkstück 1 für den weiteren Prozessablauf ausreichend gekennzeichnet ist.

### Zusammenfassend lässt sich festhalten:

Durch die Erfindung wird die Produktivität bei steigender Qualität und Transparenz innerhalb der Fertigungsprozesse erhöht. Auch bei Einzel- und Kleinserienfertigung wird somit der Automatisierungsgrad erhöht. Dies erfolgt insbesondere in den entsprechenden Produktionsbereichen durch die Verkettung einzelner Bearbeitungszentren und durch eine insgesamt transparentere Strukturierung der Fertigungs- und Ablaufprozesse insgesamt und deren Optimierung. Durch die Erfindung ist bei einer typischen Individualfertigung, bei der eine feste Verkettung, zum Beispiel mittels fest installierter Transportbänder, Robot-Systeme etc., nicht möglich ist, ein höherer Automatisierungsgrad möglich. Durch die Erfindung kann die Verbindung einzelner Fertigungsinseln flexibel erfolgen, wobei neben dem Transport auch die (Zwischen-)Lagerung teilfertiger Produkte flexibel ermöglicht wird. Um gleichermaßen sicher wie kostenoptimiert die Teile dem folgenden Fertigungsschritt zu zuführen, ist eine Kommunikation von Werkstücken und Verarbeitungseinheiten erforderlich. Gemäß der Erfindung ist im Produktionsprozess jedem Werkstück und vorzugsweise auch jeder Station und/oder Verarbeitungseinheit eine Kennung dauerhaft zugewiesen, die dieses entsprechend eindeutig identifizierbar gestaltet und im Falle des Werkstücks dieses gleichzeitig hinsichtlich des jeweils realisierten Fertigungszustands kennzeichnet. Das Aufbringen von entsprechenden Kennzeichnungsmitteln wie den RFID-Tags 2 erfolgt bevorzugt ohne zusätzlichen manuellen Aufwand innerhalb der Prozesskette an strategisch geeigneten Positionen des Werkstücks, insbesondere an dessen Seitenflächen 1b. Ferner ist die Kommunikation auch möglich, wenn weitere Bearbeitungsschritte unter ansonsten kennzeichnungsbeeinträchtigenden Bedingungen wie Lackierung, Trockenbereich, Verbindung unter Druck etc. durchgeführt werden.

Auch für die Endkontrolle, die Baugruppenmontage, die externe Logistik und/oder den externen Zusammenbau werden die entsprechenden Informationen kommuniziert und an den Werkstücken gespeichert. Dies ermöglicht die ständige Vollständigkeitskontrolle und Ausgabe der relevanten Daten an Fertigungsleitstands-Systeme oder dergleichen. So ist bei der Endmontage neben der Vollständigkeitsprüfung auch, bspw. durch ein adaptierbares CAD-System, der Monteur geeignet in die Lage versetzt, Werkstücke, Werkstück-Bauteile oder Werkstück-Gruppen über deren Identifizierung, an der jeweils vorgesehenen Stelle zu positionieren, beispielsweise bei Einbauschränken, Schubladen, Regalböden etc.

Gekennzeichnet und entsprechend auch identifiziert werden plattenförmige Werkstücke, insbesondere aus Holz, Faserholz, Holzverbundstoffen und/oder Kunststoff, welche auch allgemein als Plattenware oder Massivplattenwerkstücke bezeichnet werden. Die Erfindung ermöglicht während jedes Produktions- oder Verarbeitungsschrittes eine Kommunikation der relevanten Informationen, beispielsweise über den jeweiligen Fertigungszustand. Dabei sieht die Erfindung es vor, dass nach erfolgtem Auslesen der Daten durch ein Lesesystem, und anschließender Weiterbearbeitung des Werkstücks, das Lesesystem auch eine Schreibeinheit umfasst, um Informationen nach der Weiterverarbeitung an den RFID-Tag 2 zu senden und dort abzulegen. Es erfolgt eine bidirektionale Kommunikation. Insofern sind die Verarbeitungs- und/oder Handlingstationen oder -einheiten 6 auch zugleich Kommunikationsstationen. In jeder Be- oder Verarbeitungsstation läuft der Kommunikationsprozess weitestgehend identisch ab: Zuerst erfolgt ein Lesen der abgelegten Informationen, dann erfolgt das Bearbeiten und dann erfolgt das Schreiben der neuen Informationen. Gerade in der Holzverarbeitung wird dabei berücksichtigt, dass die Ausgangsgeometrie der Massivplattenwerkstücke 1 zumeist eine Großplatte, oder auch ein Massivwerkstückrohling ist, aus der dann eine Mehrzahl von Massivplattenwerkstücken 1 erzeugt werden. Nach diesem Erzeugungsvorgang sind die einzelnen Massivplattenwerkstücke 1 definiert und positioniert angeordnet. Innerhalb des erfindungsgemäßen Gesamtsystems wird durch eine Handlingeinheit 6, welche auch als Manipulator, Roboter etc. ausgebildet sein kann, das Massivplattenwerkstück 1 an eine Einbring- oder Präge- oder Locheinheit 7 gefördert. An dieser Einheit 7 wird mechanisch eine kleine Vertiefung an der Seitenfläche 1b oder an einer anderen geeigneten Stelle erzeugt, die der späteren Aufnahme des RFID-Tags 2 dient. Dabei kann die Prägeeinheit 7 aktiv oder passiv ausgestaltet werden, je nach Werkstückmaterial und Oberflächenanforderung.

Nach dieser vorbereitenden Maßnahme wird das Massivplattenwerkstück 1 an eine Spendestation 8 geführt. Hier wird mit einem Etikettenspender der RFID-Tag 2 auf einer Trägerfolie 4 mit der erforderlichen Antenne 3 so aufgebracht, dass der RFID-Tag 2, der auch als Transponder bezeichnet wird, genau die Vertiefung bzw. die Ausnehmung 10 trifft. Die Materialstärken der Antenne 3 bzw. der Trägerfolie 4 sind so ausgebildet, dass sie im weiteren Prozessablauf nicht stören. Ferner wird der RFID-Tag 2 vor dem Spendevorgang innerhalb der Spendestation 8 mit einer individuellen Codierung versehen, die als Werkstück-Identifikations-Code (WIC) das Werkstück 1 dauerhaft mit einer unveränderbaren Sequenz versieht. Ferner ist ein Bestandteil der Codierung die Beschreibung des jeweils erfolgten Prozessschrittes, wodurch eine weitere Sequenz mit dem Prozess-Schritt-Code (PSC) zu belegen ist. Nach der zuvor beschriebenen Kennzeichnung des Werkstückes wird dieses an einer definierten Übergabestation 9 abgelegt. Diese kann als Transportbehälter, Palette, Wagen oder dergleichen zu bezeichnende Logistikkomponente (LK) ausgestaltet sein. Durch die Platzierung des RFID-Tags 2 an der Seitenfläche 1b können so auch mehrere Massivplattenwerkstücke auf der Logistikkomponente übereinander gestapelt werden, ohne den RFID-Tag 2 zu beschädigen. Die Logistikkomponente kann ebenfalls mit einem RFID-Tag 2 versehen werden, der die Logistikkomponente jederzeit erkennbar macht. Sind von verschiedenen Aufträgen, Materialien und/oder dimensionsgleichen Werkstücken ausreichend viele gepuffert oder zwischengelagert, kann das übergeordnete Fertigungsleitsystem (FLS) den nachfolgenden Transport der Werkstücke veranlassen. In dem hier beschriebenen System wird dann eine Bearbeitungsstation angesteuert, die die Seitenfläche 1b mit unterschiedlichen Materialien beschichtet. Diese können gleichermaßen Massivleisten, aber auch Folien aus Kunststoff, Metall, Papier o.ä. sein. Dieser Prozess erfolgt vorzugsweise ebenfalls automatisch und betrifft in den überwiegenden Fällen eine Kantenanleimstation 30 (KAS). So werden bspw. mittels fahrerlosen Transportsystemen Logistikkomponenten von dem bisherigen Standort an die Kantenanleimstation 30 verbracht. Dort wird mittels weiterem Handling das jeweilige Werkstück aufgenommen, einer weiteren Kommunikationsstation zugeführt und entsprechende Informationen ausgelesen. Hierdurch wird sichergestellt, dass das Werkstück mit der korrekten Leimkante versehen wird. Wie auch in diesem Fall wird häufig die Leimkante pro Arbeitsdurchlauf nur auf einer Seite des Werkstückes aufgebracht. Das bedeutet, dass jedes Werkstück mehrmals die Arbeitsstation durchlaufen kann oder muss. In diesem Fall wird mit jedem Durchlauf eine weitere Codierung über die erfolgten Arbeitsgänge in den RFID-Tag 2 geschrieben. Das Aufbringen der Leimkanten erfolgt in einem kontinuierlichen Prozess. Auch nach dieser Bearbeitungsphase wird das Werkstück wiederum zwischengelagert und steht für die spätere Weiterverarbeitung bereit. In der Folge können unendlich viele Prozessschritte nach dem gleichen Schema verlaufen, bis die Werkstücke für die Endmontage kommissioniert werden müssen. Auch hier zeigen sich wieder die Vorteile der RFID-gestützten Bauteilkodierung: Jedes Werkstück wird innerhalb eines Gates oder einer Station erfasst und es kann somit überprüft werden, ob es das richtige Bauteil und in dem vorgesehenen Fertigungszustand ist.

Nach der erfolgten Montage ergeben sich Möglichkeiten an jeder Position innerhalb und außerhalb der Produktionsstätte zu erkennen, ob aus mehreren Werkstücken bestehende Baugruppen vollständig und korrekt bearbeitet sind. Dies gilt ebenfalls für den Versand und die Montage auf den Baustellen vor Ort. An den Einbauorten besteht dann die Möglichkeit, mittels Mobillesegerät, das mit einem CAD -tauglichen Notebook verbunden wird, alle Bauteile nicht nur zu erkennen, sondern mittels Montageanweisungen, Explosionszeichnungen o. ä. die Montage zu unterstützen und den Akteuren bspw. Einbaupositionen zu visualisieren. Durch das zuvor beschriebene System werden insbesondere schwere manuelle Tätigkeiten substituiert. Ferner können Fertigungsaufträge noch stärker chaotisch versetzt abgearbeitet werden. Dadurch werden noch weniger Rüstzeiten den Produktionsfluss hemmen. Durch fahrerlose Transportsysteme können innerbetriebliche Abläufe automatisiert und optimiert werden, hinsichtlich Wege, Zeiten und Einsatzdauer. Auch die derzeit noch übliche Etikettierung der Bauteile auf den Hauptseitenflächen 1a kann entfallen. Nach der Oberflächenbehandlung sind die Werkstücke gegenüber herkömmlich gekennzeichneten Werkstücken, bei denen die Kennzeichnungsmittel zur Bearbeitung entfernt werden müssen, weiterhin identifizierbar. Mittels der Erfindung sind die Werkstücke jederzeit identifizierbar, vermitteln den individuellen Produktionsstand, können im Fertigungsprozess nachverfolgt und entsprechende Bearbeitungszeiten automatisiert erfasst werden. Hierdurch werden belastbarere Produktionsdaten erfasst, die wiederum eine noch genauere Basis bieten für die Kalkulation. Da mehr als 95% aller Bauteile zumindest eine automatisch aufzubringende Leimkante erhalten, erfolgt die strategisch günstigste Positionierung des RFID-Tags 2 nach dem Zuschnitt. Die darüber aufzubringende Leimkante schützt den RFID-Tag 2 vor mechanischen oder chemischen Beschädigungen. Das erfindungsgemäße System reduziert Aufwand und Kosten, erleichtert die Tätigkeit der Mitarbeiter, senkt die Fehlerquote, ermöglicht eine noch flexiblere Fertigung, reduziert die Fertigungslaufzeiten und schafft mehr Sicherheit innerhalb der Montageprozesse. Ferner werden Kosten für die Entfernung aufgebrachter Etiketten gespart. Zusätzlich kann, bei optimaler Implementierung des Systems, auf Fertigungsbegleitdokumente verzichtet werden. Hierzu sind dann jedoch durchgängig alle Prozessschritte innerhalb der Fertigungsleitstands-, PPS- und CAD/CAM-Systemen abzubilden.

### Bezugszeichenliste

- 1: Massivplattenwerkstück
- 1a: Hauptfläche
- 1b: Seitenfläche
- 2: RFID-Tag
- 3: Antenne
- 4: Trägerfolie
- 5: Schicht
- 6: Handlingeinheit
- 6a: Greifeinheit
- 6b: Greifarm
- 7: Einbringeinheit (Präge-/Lochstation)
- 7a: Werkzeug
- 8: Spendestation
- 9: Übergabestation
- 10: Ausnehmung
- 20: Zuschnittstation
- 21: Lagereinheit
- 30: Kantenanleimstation
- 31: Leisten
- 32: Zuführeinheit
- 33: Fördereinheit
- 40: Kommunikationseinrichtung
- 40a: Reader
- 45: Bearbeitungsstation
- 46: Kantenfrässtation
- 46a: Kantenfräser
- 47: Applikator
- 50: Vorbehandlungsstation bzw. Verbindungsstation
- 60: Druckrollen
- 61: Leimkante
- 62: Leimkantenspender
- 100: Vorrichtung
- 110: Einrichtung

## Patentansprüche

1. Verfahren zur Verarbeitung von Massivplattenwerkstücken (1), insbesondere von Massivholzplatten, mit einem RFID-Tag (2), insbesondere einem in einer Ausnehmung (10) des Massivplattenwerkstücks (1) angeordneten RFID-Tag (2), umfassend die Schritte:
Einlesen von auf dem RFID-Tag (2) abgelegten Verarbeitungsinformationen, Verarbeiten des Massivplattenwerkstücks (1) unter Berücksichtigung der eingelesenen Verarbeitungsinformationen und Ablegen von Informationen umfassend Informationen über den Verarbeitungsvorgang auf dem RFID-Tag (2).

2. Verfahren nach Anspruch 1 umfassend die Schritte:
Einbringen einer Ausnehmung (10) in das Massivplattenwerkstück (1), insbesondere in einer Seitenfläche (1b) des Massivplattenwerkstücks (1), wobei die Ausnehmung (10) insbesondere mittels Prägen eingebracht wird, und Anordnen eines RFID-Tags (2) an der Ausnehmung (10), sodass der RFID-Tag (2) ohne wesentlichen Überstand in der Ausnehmung (10) angeordnet ist.

3. Verfahren nach einem der vorherigen Ansprüche 1 oder 2, **dadurch gekennzeichnet, dass** die Ausnehmung (10) in das Massivplattenwerkstück (1) an einer definierten Position eingebracht wird und die Informationen über die Position auf dem einzubringenden RFID-Tag (2) abgelegt werden und/oder dass der RFID-Tag (2) vor dem Einbringen in die Ausnehmung mit einer Initialprogrammierung programmiert ist.

4. Verfahren nach einem der vorherigen Ansprüche 1 bis 3, **dadurch gekennzeichnet, dass** das Massivplattenwerkstück (1) mehrstufig verarbeitet wird.

5. Verfahren nach einem der vorherigen Ansprüche 1 bis 4, **dadurch gekennzeichnet, dass** an mindestens einer Verarbeitungsstufe, bevorzugt an allen Verarbeitungsstufen, eine bidirektionale Kommunikation mit dem RFID-Tag (2) durchgeführt wird.

6. Verfahren nach Anspruch 5, **dadurch gekennzeichnet, dass** die bidirektionale Kommunikation ein Lesen von auf dem RFID-Tag (2) abgelegten Informationen vor dem Verarbeiten an der jeweiligen Verarbeitungsstufe umfasst.

7. Verfahren nach einem der vorherigen Ansprüche 5 oder 6, **dadurch gekennzeichnet, dass** die bidirektionale Kommunikation ein Speichern von Informationen über die durchgeführte Verarbeitung der jeweiligen Verarbeitungsstufe auf dem RFID-Tag (2) umfasst.

8. Verfahren nach einem der vorherigen Ansprüche 1 bis 7, **dadurch gekennzeichnet, dass** in einer Verarbeitungsstufe, bevorzugt in einer direkt dem Einbringen des RFID-Tags (2) folgenden Verarbeitungsstufe, eine Verarbeitung durchgeführt wird, mit welcher der RFID-Tag (2) zumindest teilweise, bevorzugt komplett gegenüber einer Außenumgebung verdeckt wird, beispielsweise durch eine Beschichtung im Bereich des RFID-Tags (2), sodass der RFID-Tag (2) zumindest teilweise vor äußeren Einflüssen geschützt ist, ohne die Kommunikation wesentlich zu beeinträchtigen.

9. Vorrichtung (100) zur Verarbeitung von Massivplattenwerkstücken (1), insbesondere von Massivholzplatten, umfassend:
eine Bereitstellungseinheit (20, 21) zum Bereitstellen eines Massivplattenwerkstücks (1) und mehrere Verarbeitungseinheiten zur mehrstufigen Verarbeitung des Massivplattenwerkstücks (1), **dadurch gekennzeichnet, dass** Mittel zu Durchführung eines Verfahrens nach einem der vorherigen Ansprüche 1 bis 8 vorgesehen sind, wobei insbesondere mindestens eine Spendeeinheit (7) vorgesehen ist, um den RFID-Tag (2) in die Ausnehmung (10) ohne Überstand einzubringen.

10. Vorrichtung (100) nach Anspruch 9, **dadurch gekennzeichnet, dass** eine Kantenanleimstation (30) zum Anleimen von Kanten an ein Werkstück (1) insbesondere an ein plattenförmiges Werkstück zur Fertigung von Möbelstücken, vorgesehen ist, umfassend eine Kantenzuführeinrichtung zum Zuführen von Anleimkanten (31) zu dem Werkstück (1) und eine Kantenverbindungseinrichtung zum Verbinden der zugeführten Anleimkanten (31).

11. Vorrichtung (100) nach einem der Ansprüche 9 oder 10, **dadurch gekennzeichnet, dass** eine Bearbeitungsstation (45), insbesondere eine Kantenfrässtation (46) vorgesehen ist.

12. Vorrichtung (100) nach einem der Ansprüche 9 bis 11, **dadurch gekennzeichnet, dass** die Bearbeitungsstation (45) eine Vorbehandlungsstation bzw. Verbindungsstation (50) umfasst.

13. Vorrichtung (100) nach Anspruch 9, **dadurch gekennzeichnet, dass** eine TAG-Entfernungseinheit vorgesehen ist, um mit dem Werkstück (1) zugeführte RFID-Tags (2) vor Durchlauf der Bearbeitungsstation (45) zu entfernen.

14. Verwendung eines RFID-Tags (2) zur Kennzeichnung von Massivplatten in einem mehrstufigen Verarbeitungsprozess gemäß einem der Ansprüche 4 bis 8, insbesondere bei Massivplatten ausgewählt aus der Gruppe umfassend Massivplatten aus Holz, Faserholz, Holzverbundstoffen, Kunststoff, insbesondere für den Innenausbau und/oder für Möbelstücke.
